# EUROPEAN PATENT APPLICATION

(11) **EP 4 335 314 A2**
(43) Date of publication of application: **13.03.2024**
(21) Application number: 23217706.3
(22) Date of filing: 21.07.2022
(51) Int. Cl.: A24F 40/50

(54) **AEROSOL GENERATING DEVICE**

(30) Priority: 21.07.2021 KR 20210095617
(62) Divisional of application: 22846247.9
(71) Applicant: KT & G Corporation, Daejeon 34337 (KR)
(72) Inventor: KIM, Dong Sung, 06310 Seoul (KR); KIM, Yong Hwan, 13970 Gyeonggi-do (KR); LIM, Hun Il, 05555 Seoul (KR); JANG, Seok Su, 34337 Daejeon (KR)
(74) Representative: Ter Meer Steinmeister & Partner

(57) **Abstract**

An aerosol generating device includes: a housing including a hole for receiving an aerosol generating article and a guide apart from the hole; and a cover configured to move along the guide between a first position and a second position to open or close the hole, wherein the hole is open when the cover is located in the first position, and the hole is closed when the cover is located in the second position.

## Description

### Technical Field

One or more embodiments relate to an aerosol generating device, and more particularly, to an aerosol generating device having maintenance convenience and improved safety and being capable of generating a high quality aerosol.

### Background Art

Recently, there has been an increasing demand for an aerosol generating device that generates aerosol based on a non-combustion method without combustion of tobacco. For example, an aerosol generating device may deliver aerosol to the distal airway of a user by generating aerosol with a non-combustion method or by generating aerosol from aerosol generating material and having the aerosol pass through a flavor medium before outputting from the aerosol generating device.

The aerosol generating device may include an accommodation space in which an aerosol generating article is accommodated. A housing of the aerosol generating device may include a hole connected to the accommodation space, and the aerosol generating article may be inserted into the aerosol generating device through the hole.

In order to prevent impurities from entering the accommodation space while the aerosol generating device is not in use, a cover to open or close the accommodation space may be provided in the aerosol generating device. The cover may move between a position to close the hole of the accommodation space and a position to open the hole of the accommodation space, thereby closing or opening the accommodation space.

Also, a guide to guide the movement of the cover may be provided in the aerosol generating device. The cover may be movably connected to the guide and may open or close the hole through which the aerosol generating article is inserted.

### Disclosure

### Technical Problem

When an accommodation space and a guide of an aerosol generating device are located to contact each other, a droplet or dregs generated in an aerosol generation process may move to the guide. When the droplet or dregs accumulated in the guide, the accumulated droplet or dregs may interrupt the movement of the cover or may damage the cover during the movement of the cover.

Also, because the accommodation space and the guide contact each other, the guide may interfere with an air flow passage through which air is introduced into the accommodation space. In this case, an aerosol generated in the aerosol generating device may leak to the outside of the aerosol generating device through the guide, and thus the amount of aerosol provided to a user may be reduced, and also the amount of smoke may be reduced.

Technical aspects, features and advantages to be achieved with respect to the embodiments are not limited to the above-described problems, and embodiments that are not mentioned in the disclosure will be clearly understood by one of ordinary skill in the art from the present disclosure and the accompanying drawings.

### Solution to Problem

Embodiments provide an aerosol generating device in which a hole for insertion of an aerosol generating article and a guide for guiding movement of a cover are arranged to be apart from each other.

Also, embodiments provide an aerosol generating device in which a cover may be maintained at a position to close or open a hole of an accommodation space, and the cover may semi-automatically move.

According to one or more embodiments, an aerosol generating device includes: a housing including a hole into which an aerosol generating article is inserted and a guide apart from the hole; and a cover moving between a first position and a second position of the guide to open or close the hole, wherein, when the cover is located in the first position, the hole is open, and when the cover is located in the second position, the hole is closed.

### Advantageous Effects of Invention

According to an aerosol generating device according to embodiments, a hole of an accommodation space and a guide may be arranged to be apart from each other, thereby preventing movement of a droplet or dregs into the guide. Therefore, even when the guide is not additionally cleaned, accumulation of impurities in the guide may be prevented, and damage to the cover, due to the impurities, may be prevented.

Also, an air inlet may provide an air flow passage separately from the guide, and thus, the air flow passage may not interfere with the guide. Thus, the amount of smoke may be improved, and user's smoking satisfaction may be increased.

The effects according to one or embodiments are not limited to the effects described above, and unmentioned effects will be clearly understood by one of ordinary skill in the art from the present specification and the accompanying drawings.

### Description of Drawings

FIG. 1 is a perspective view of an aerosol generating device in which a hole is open, according to an embodiment.
FIG. 2 is a perspective view of an aerosol generating device in which a hole is closed, according to an embodiment.
FIG. 3A is a plan view of an operation state of an aerosol generating device according to an embodiment.
FIG. 3B is a plan view of another operation state of an aerosol generating device according to an embodiment.
FIG. 4 is a cross-sectional view of an aerosol generating device according to an embodiment.
FIGS. 5A through 5C are views of a movement process of a cover of an aerosol generating device according to another embodiment.
FIG. 6 is a flowchart of a method, performed by a processor of an aerosol generating device, of controlling an operation of supplying power, according to another embodiment.
FIG. 7 is a block diagram of an aerosol generating device according to embodiments.
FIGS. 8 and 9 are views of examples of an aerosol generating article.

### Best Mode of Carrying out the Invention

According to an embodiment, an aerosol generating device may include: a housing comprising a hole for receiving an aerosol generating article and a guide apart from the hole; and a cover configured to move along the guide between a first position and a second position to open or close the hole, wherein the hole is open when the cover is located in the first position, and the hole is closed when the cover is located in the second position.

### Mode for Invention

With respect to the terms used to describe in the various embodiments, the general terms which are currently and widely used are selected in consideration of functions of structural elements in the various embodiments of the present disclosure. However, meanings of the terms can be changed according to intention, a judicial precedence, the appearance of a new technology, and the like. In addition, in certain cases, a term which is not commonly used can be selected. In such a case, the meaning of the term will be described in detail at the corresponding portion in the description of the present disclosure. Therefore, the terms used in the various embodiments of the present disclosure should be defined based on the meanings of the terms and the descriptions provided herein.

In addition, unless explicitly described to the contrary, the word "comprise" and variations such as "comprises" or "comprising" will be understood to imply the inclusion of stated elements but not the exclusion of any other elements. In addition, the terms "-er", "-or", and "module" described in the specification mean units for processing at least one function and operation and can be implemented by hardware components or software components and combinations thereof.

As used herein, expressions such as "at least one of," when preceding a list of elements, modify the entire list of elements and do not modify the individual elements of the list. For example, the expression, "at least one of a, b, and c," should be understood as including only a, only b, only c, both a and b, both a and c, both b and c, or all of a, b, and c.

Terms such as "first" and "second" may be used to describe various components, but the components should not be limited by the terms. The terms are only used to distinguish one component from another.

In addition, some of the components in the drawings may be illustrated with exaggerated sizes or proportions. In addition, the components shown in one figure may not be shown on another figure.

In addition, throughout the specification, the "longitudinal direction" of a component may be a direction in which the component extends along one axis of the component, and in this case, the one axis of the component may refer to a direction in which the component extends longer than the other axis transverse to the one axis.

Throughout the specification, the term "puff" refers to the user's inhalation, and the inhalation may refer to a situation in which air is drawn into the user's mouth, nasal cavity, or lungs through the user's mouth or nose.

Since various embodiments described in the specification are classified arbitrarily only for the purpose of explanation, the embodiments should not be construed to be exclusive to each other. For example, some features disclosed in one embodiment may be applied to or implemented in other embodiments. In the present disclosure, a singular form also includes a plural form unless specifically stated in otherwise.

Hereinafter, the present disclosure will be described more fully with reference to the accompanying drawings, in which embodiments of the present disclosure are shown such that one of ordinary skill in the art may easily understand the present disclosure. However, the present disclosure may be embodied in many different forms and should not be construed as being limited to the embodiments set forth herein.

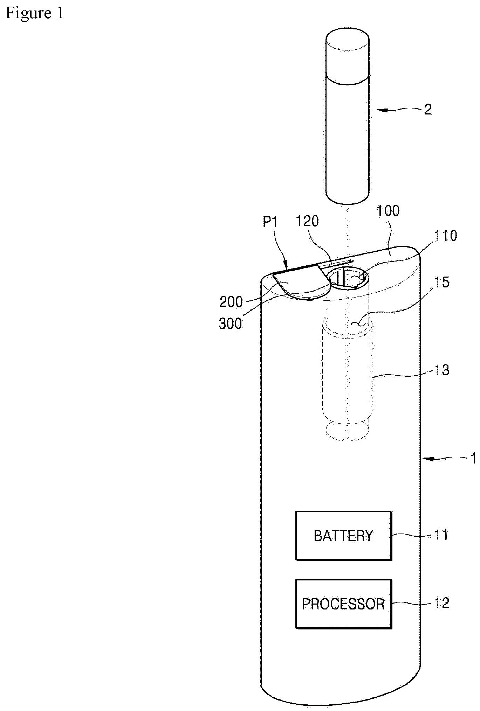

FIG. 1 is a perspective view of an aerosol generating device, in which a hole is open, according to an embodiment. According to an embodiment, an aerosol generating device 1 may be a device for generating aerosol by electrically heating an aerosol generating article 2 accommodated in an accommodation space 15. Also, the aerosol generating device may include a cartridge containing an aerosol generating material.

FIG. 1 illustrates components of the aerosol generating device 1 according to the present embodiment. Thus, it will be understood by one of ordinary skill in the art of the present embodiment that other components may further be included in the aerosol generating device 1, in addition to the components illustrated in FIG. 1.

Referring to FIG. 1, the aerosol generating device 1 according to an embodiment may include: a housing 100 including the accommodation space 15 accommodating at least a portion of the aerosol generating article 2; and a cover 200 opening or closing the accommodation space 15. Also, the aerosol generating device 1 according to an embodiment may include a battery 11, a processor 12, and a heater 13.

The housing 100 may include a hole 110 that communicates with the outside of the aerosol generating device 1. The aerosol generating article 2 may be inserted into the accommodation space 15 through the hole 110. The accommodation space 15 may be exposed to the outside of the aerosol generating device 1 through the hole 110.

The heater 13 may be arranged to surround at least a portion of an outer side of the accommodation space 15, but is not limited thereto. For example, the heater 13 may be a heating device using an induction heating method. In this case, the heater 13 may include a cylindrical susceptor surrounding at least a portion of the accommodation space 15 and a coil surrounding the susceptor. Alternatively, the heater 13 may be arranged to protrude to the accommodation space 15 to be inserted into the aerosol generating article 2. The heater 13 may include a tube-type heating element, a plate-type heating element, a needle-type heating element, or a rod-type heating element, and may heat the inside or the outside of the aerosol generating article 2, according to the shape of the heating element.

Also, the aerosol generating device 1 may include a plurality of heaters 13. Here, the plurality of heaters 13 may be arranged to be inserted into the aerosol generating article 2 or may be arranged outside the aerosol generating article 2. Also, some of the plurality of heaters 13 may be arranged to be inserted into the aerosol generating article 2, and the others may be arranged outside the aerosol generating article 2. Moreover, shapes of the heater 13 are not limited to the shape illustrated in FIG. 1, and may include various shapes.

The housing 100 may include a guide 120 for guiding movement of a cover 200. The cover 200 may be movably connected to the guide 120, and thus, may move along the guide 120. For example, the guide 120 may be a groove provided on a surface of the housing 100, and the cover 200 may include a protrusion inserted into the groove such that the cover 200 slides along the groove. However, the guide 120 and the cover 200 are not limited thereto. As another example, the guide 120 may be a protrusion provided on a surface of the housing 100, and the cover 200 may include a groove inserted into the protrusion. Also, the guide 120 and the housing 100 may be integrally formed or may be coupled to each other after being separately formed.

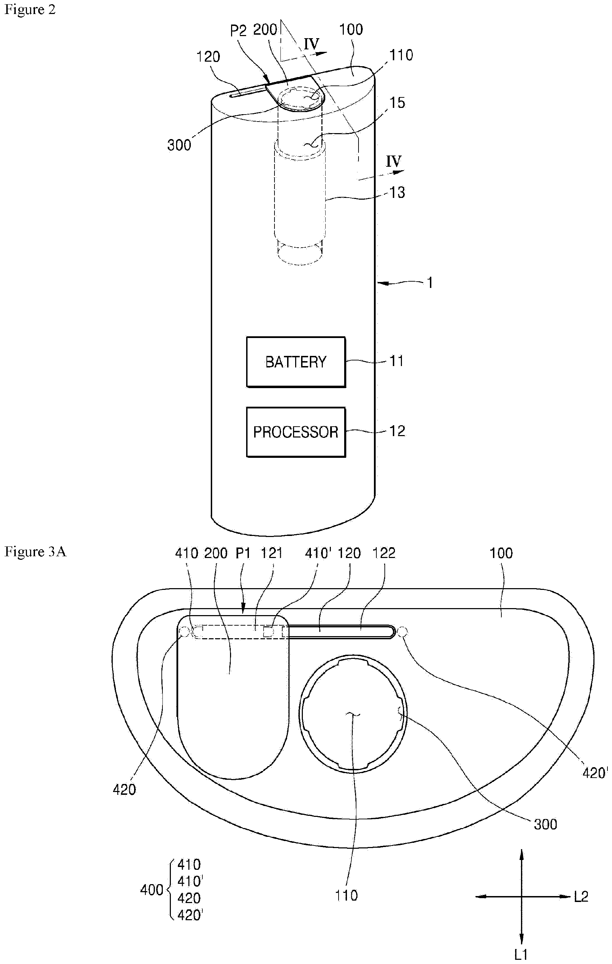

The cover 200 may move between a first position P1 and a second position (P2 of FIG. 2) of the guide 120 to open or close the hole 110. In more detail, the cover 200 may move between the first position P1 to open the hole 110 of the accommodation space 15 and the second position (P2 of FIG. 2) to close the hole 110. When the cover 220 is located in the first position P1, the entire hole 110 may be open, and when the cover 200 is located in the second position (P2 of FIG. 2), the entire hole 110 may be covered. The position of the cover 200 may be adjusted by a user pushing the cover with a finger. Also, the aerosol generating device 1 may include an additional driver configured to adjust a position of the cover 200 along the guide 120.

The cover 200 may have a shape corresponding to a shape of the hole 110. For example, when the hole 110 is circular, at least a portion of the cover 200 may include a circular arc having a diameter greater than a diameter of the hole 110.

In order to use the aerosol generating device 1, a user may move the cover 200 to the first position P1 to open the hole 110 so as to expose the accommodation space 15 to the outside of the aerosol generating device 1. The user may insert the aerosol generating article 2 into the accommodation space 15 through the hole 110 that is open.

When the aerosol generating article 2 is inserted into the aerosol generating device 1, the aerosol generating device 1 may operate the heater 13 to generate aerosol. The aerosol generated by the heater 13 may be delivered to the user through the aerosol generating article 2.

As necessary, even when the aerosol generating article 2 is not inserted into the aerosol generating device 1, the aerosol generating device 1 may heat the heater 13.

The battery 11 may supply power to be used for the aerosol generating device 1 to operate. The battery 11 may supply power so that the heater 13 may be heated. The battery 11 may be a rechargeable battery 11 or a disposable battery 11. For example, the battery 11 may be a lithium polymer (LiPoly) battery 11, but is not limited thereto.

According to an embodiment, the heater 13 may be an electrically resistive heater 13. For example, the heater 13 may include an electrically conductive track, and the heater 13 may be heated when currents flow through the electrically conductive track.

According to an embodiment, the heater 13 may include any suitable electrically resistive material. For example, the suitable electrically resistive material may be a metal or a metal alloy including titanium, zirconium, tantalum, platinum, nickel, cobalt, chromium, hafnium, niobium, molybdenum, tungsten, tin, gallium, manganese, iron, copper, stainless steel, or nichrome, but is not limited thereto. In addition, the heater 13 may be implemented by a metal wire, a metal plate on which an electrically conductive track is arranged, or a ceramic heating element, but is not limited thereto.

According to another embodiment, the heater 13 may be a heater using an induction heating method. For example, the heater 13 may include a susceptor configured to emit heat through a magnetic field applied by the coil and heat an aerosol generating material.

The heater 13 may heat the aerosol generating material by using power received from the battery 11. Although not illustrated in FIG. 1, the aerosol generating device 1 may further include a power conversion circuit (for example, a DC/DC converter) configured to convert power of the battery 11 and supply the converted power to the heater 13. Also, when the aerosol generating device 1 generates aerosol by using the induction heating method, the aerosol generating device 1 may further include a DC/AC converter configured to convert direct current power of the battery 11 into alternating current power.

The processor 12 may control general operations of the aerosol generating device 1. According to an embodiment, the processor 12 may include at least one processor. The processor 12 may be implemented as an array of a plurality of logic gates or may be implemented as a combination of a general-purpose microprocessor and a memory in which a program executable in the microprocessor is stored. Also, it will be understood by one of ordinary skill in the art that the processor may be implemented in other forms of hardware.

The processor 12 may control a temperature of the heater 130 by controlling an operation of supplying power of the battery 11 to the heater 13. For example, the processor 12 may control the operation of supplying power by controlling a switching operation of a switching device between the battery 11 and the heater 13. As another example, a direct heating circuit may control the operation of supplying power to the heater 13 according to a control command of the processor 12.

FIG. 2 is a perspective view of an aerosol generating device, in which a hole is closed, according to an embodiment.

Referring to FIG. 2, when the aerosol generating device 1 is not in use, a user may move the cover 200 to the second position P2 to close the hole 110. When the cover 200 moves to the second position P2 to close the hole 110, the accommodation space 15 may be sealed and blocked from the outside of the aerosol generating device 1. The cover 200 may close the hole 110, and thus, introduction of impurities into the accommodation space 15 may be prevented. Also, a droplet or dregs generated in the aerosol generating device 1 during an aerosol generation process may be prevented from being discharged to the outside of the aerosol generating device 1 through the accommodation space 15.

In a general aerosol generating device, a guide and a hole are arranged to contact each other for a cover to close the hole. In this case, the guide communicates with an accommodation space, and thus a droplet or dregs remaining in the accommodation space may move to the guide. In particular, when the guide is provided as a guide groove, droplets or dregs accumulated in the groove of the guide may operate as an obstacle to movement of the cover, and thus the cover may be damaged. Also, even in a state in which the cover covers the hole, a droplet or dregs may be discharged to the outside of the aerosol generating device through the guide. Therefore, a user may have to periodically remove the droplet or the dregs accumulated in the guide.

Also, in the case of the general aerosol generating device, in which the accommodation space and the guide contact each other, air may enter into the aerosol generating device through the guide, and aerosol generated in an aerosol generating article may be discharged through the guide. In this case, inhalation resistance may not be constant because the droplet or the dregs accumulated in the guide may disrupt introduction of air. Also, because aerosol may be discharged through the guide, the amount of smoke may be reduced.

According to the aerosol generating device 1 according to an embodiment, while the guide 120 may be adjacent to the hole 110 of the accommodation space 15, the hole 110 and the guide 120 may be apart from each other. Here, being apart from each other means that the guide 120 may be arranged to be apart from the hole 110 by a predetermined distance and may not meet the hole 110.

As illustrated in FIGS. 1 and 2, the guide 120 may be apart from the hole 110 by a predetermined distance, and thus, the guide 120 and the accommodation space 15 may not be connected to each other and may be separately provided. Therefore, according to the aerosol generating device 1 according to an embodiment, it is possible to prevent a phenomenon in which a droplet or dregs remaining in the accommodation space 15 moves to the guide 120. According to the aerosol generating device 1 according to an embodiment, the droplet or the dregs may not be discharged to the outside of the aerosol generating device 1 through the guide 120, and the droplet or the dregs may not be accumulated in the guide 120. As a result, maintenance of the aerosol generating device 1 may be convenient.

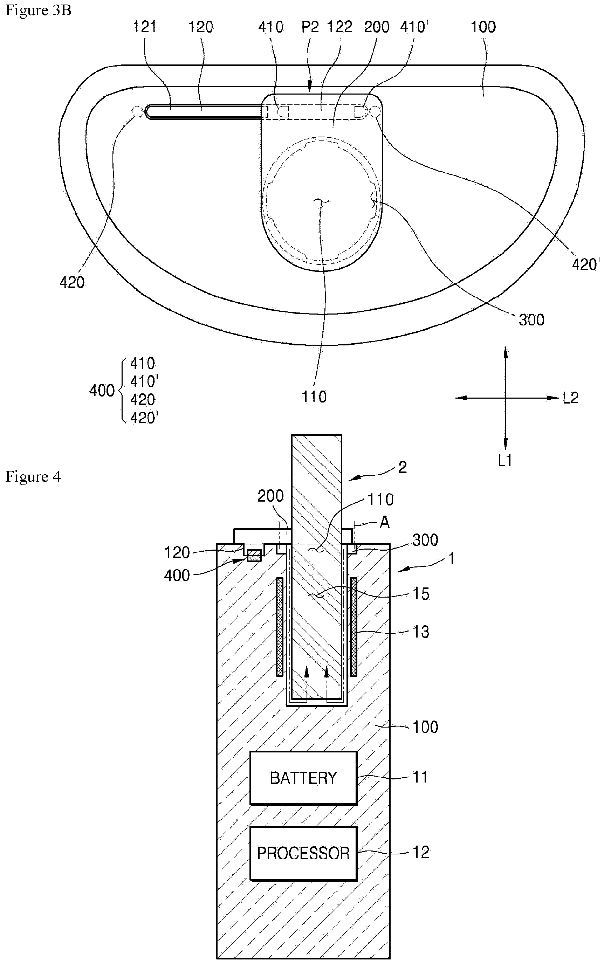

FIGS. 3A and 3B are plan views of an aerosol generating device according to an embodiment. In more detail, FIG. 3A is a plan view of a state in which a cover is located in a first position, and FIG. 3B is a plan view of a state in which the cover is located in a second position.

Generally, when a user is not using the aerosol generating device 1, the user may carry the aerosol generating device 1 in a pocket, and when the user is using the aerosol generating device 1, the user may use the aerosol generating device 1 by holding it by hand. Thus, the aerosol generating device 1 may have to be manufactured to have an appropriate size to be portable and easy to use.

When the hole 110 and the guide 120 of the aerosol generating device 1 are serially arranged in a direction, a dimension of the aerosol generating device 1 in the direction may increase, and thus it may be uncomfortable for a user to carry and keep the aerosol generating device 1. Also, when the hole 110 and the guide 120 are serially arranged in a direction, in order for the hole 110 and the guide 120 to be apart from each other according to the embodiment, the cover 200 may have to have a size to cover a distance between the hole 110 and the guide 120.

As illustrated in FIGS. 3A and 3B, in the aerosol generating device 1 according to an embodiment, the guide 120 may be apart from the hole 110 in a first direction L1, and the guide 120 may extend in a second direction L2 crossing the first direction L1. The cover 200 may extend in the first direction L1 to sufficiently cover the entire hole 110, with at least portion of the cover 200 being connected to the guide 120.

At least a portion of the guide 120 may be located in a first area corresponding to the hole 110, and remaining portions of the guide 120 may be located in a second area not corresponding to the hole 110.

For example, the guide 120 may extend in the second direction L2 from an end 121 to the other end 122. The end 121 of the guide may be located to deviate from a position of the hole 110 in the first direction L1. When the cover 200 is located in the end 121 of the guide, the end 121 of the guide may be located to completely deviate from the hole 110, such that insertion or removal of the aerosol generating article 2 through the hole 110 is not interrupted by the cover 200

The other end 122 of the guide may be located to correspond to the position of the hole 110 in the first direction L1. In other words, the other end 122 of the guide may be located on a straight line crossing the hole 110 in the first direction L1.

The first position P1 of the cover 200 may denote a position of the cover 200 when the cover 200 has moved to the end 121 of the guide, and the second position P2 of the cover 200 may denote a position of the cover 200 when the cover 200 has moved to the other end 122 of the guide.

The cover 200 may linearly move in the second direction L2 along the guide 120 while being connected to the guide 120. When the cover 200 is located in the end 121 of the guide, the hole 110 may be open (see FIG. 3A), and when the cover 200 is located in the other end 122 of the guide, the hole 110 may be covered (see FIG. 3B).

The end 121 of the guide is located to completely deviate from the position of the hole 110 in the first direction L1, and thus, when the cover 200 is located in the end 121 of the guide, the entire hole 110 may be open. The other end 122 of the guide is located to correspond to the position of the hole 110 in the first direction L1, and thus, when the cover 200 is located in the other end 122 of the guide, the entire hole 110 may be covered by the cover 200. A user may push the cover 200 in the second direction L2 to adjust the position of the cover 200 between the end 121 of the guide and the other end 122 of the guide.

As described above, in the aerosol generating device 1 according to an embodiment, an arrangement direction of the guide 120 and the hole 110 may cross an extension direction of the guide 120 (that is, a movement direction of the cover 200). According to the aerosol generating device 1, based on this arrangement structure, even though the hole 110 and the guide 120 are arranged to be apart from each other, the housing 100 may have a small size. Thus, the aerosol generating device 1 may be appropriate to be carried and kept by a user.

Although the guide 120 is illustrated to be linear, the guide 120 is not limited thereto. At least a portion of the guide 120 may be curved, and in this case, the cover 200 may move along a curved path of the guide 120.

FIG. 4 is a cross-sectional view of an aerosol generating device according to an embodiment. FIG. 4 may be a cross-sectional view taken along line IV-IV of FIG. 2.

Referring to FIG. 4, the aerosol generating device 1 according to an embodiment may further include an air inlet 300 arranged apart from the guide 120. The air inlet 300 may be connected to an air flow passage A, which is a path through which air moves in the aerosol generating device 1. In other words, external air may enter into the aerosol generating device 1 through the air inlet 300, may move to the accommodation space 15, may be mixed with the aerosol by passing through the aerosol generating article, and then, may be inhaled by a user.

As illustrated in FIG. 4, the air inlet 300 may be arranged to be apart from the guide 120. Thus, the air inlet 300 of the aerosol generating device 1 according to an embodiment may not interfere with the guide 120 and may be independently connected with the air flow passage A. Here, being independently connected with the air flow passage A means that the air flow may not be affected by an arrangement structure or a shape of the guide 120, the cover 200 moving along the guide 120, etc.

Therefore, in the aerosol generating device 1 according to an embodiment, because the guide 120 may not affect the air flow passage A, inhalation resistance may be constant, and the aerosol may be prevented from being discharged to the outside through the guide 120. In the aerosol generating device 1 according to an embodiment, the aerosol generated from the aerosol generating article 2 may be intactly provided to the user, and thus the amount of smoke may be increased, and the high quality aerosol may be provided.

Referring to FIG. 4, the air inlet 300 may be arranged at a circumference of the hole 110. The air inlet 300 may extend, at the circumference of the hole 110, in a radial direction with respect to a center of the hole 110, and thus may provide the air flow passage A connected to the accommodation space 15.

As illustrated in FIG. 4, in a state in which the aerosol generating article 2 is accommodated in the accommodation space 15, air may enter into the accommodation space 15 through the air inlet 300 at the circumference of the hole 110. The air having entered into the accommodation space 15 may flow through the air flow passage A. Through the air flow passage A, air may flow along an outer side of the aerosol generating article 2 in an extension direction of the accommodation space 15, and then, may enter into the aerosol generating article 2.

Because the air inlet 300 is arranged to be apart from the guide 120, the air inlet 300 may not interfere with the guide 120 and may independently provide the air flow passage A. According to the aerosol generating device 1 according to an embodiment, external air may not enter into the accommodation space 15 through the guide 120, or generated aerosol may not be discharged to the outside of the aerosol generating device 1 through the guide 120.

Also, because the air inlet 300 is arranged at the circumference of the hole 110, an additional air guiding groove connected to the accommodation space 15 may not have to be provided at an external surface of the housing 100, and thus, an internal structure of the aerosol generating device 1 may become simple.

Referring to FIGS. 3A and 3B again, the aerosol generating device 1 according to an embodiment may further include a maintaining portion 400 configured to maintain the cover 200 at the first position P1 or the second position P2. The maintaining portion 400 may fix the cover 200 at the first position or the second position P2 to maintain an open state or a closed state of the hole 110.

The maintaining portion 400 may include first maintaining members 410 and 410' arranged at the cover 200 and second maintaining members 420 and 420' arranged to be adjacent to both ends of the guide 120. The first maintaining members 410 and 410' may be provided at a portion at which the cover 200 is connected with the guide 120. For example, when the guide 120 has the form of a guide groove and the cover 200 includes a protrusion inserted into the guide groove, the first maintaining members 410 and 410' may be provided at the protrusion, and the second maintaining members 420 and 420' may be arranged in the housing 100 to be adjacent to both ends of the guide 120 so as to be coupled to the protrusion of the cover 200.

Referring to FIG. 3A, when the cover 200 is located in the first position P1, the first maintaining member 410 may be coupled to the second maintaining member 420 adjacent to the end 121 of the guide so that the position of the cover 200 may be maintained at the first position P1. Also, referring to FIG. 3B, when the cover 200 is located in the second position P2, the first maintaining member 410' may be coupled to the second maintaining member 420' adjacent to the other end 122 of the guide so that the position of the cover 200 may be maintained at the second position P2.

The maintaining portion 400 may be a permanent magnet fixing the position of the cover 200 through a magnetic force, or the maintaining portion 400 may be a physical fastener using a forced insertion method. However, the maintaining portion 400 is not limited thereto. For example, the first maintaining members 410 and 410' and the second maintaining members 420 and 420' may be permanent magnets having different polarities from each other. When the cover 200 is located in an area where a force of attraction between the first maintaining members 410 and 410' and the second maintaining members 420 and 420' acts, the position of the cover 200 may be maintained at the first position P1 or the second position P2 through the force of attraction. In order to move the cover 200 in this state, a user may break the coupling between the first maintaining members 410 and 410' and the second maintaining members 420 and 420' by applying an external force resisting the attractive force between the first maintaining members 410 and 410' and the second maintaining members 420 and 420'.

Hereinafter, the aerosol generating device 1 according to another embodiment and the aerosol generating device 1 according to yet another embodiment are described with reference to the drawings. Components that are the same as the components of the aerosol generating device 1 described with reference to FIGS. 1 through 4 are referred to by using the same reference numerals, and the same descriptions are omitted.

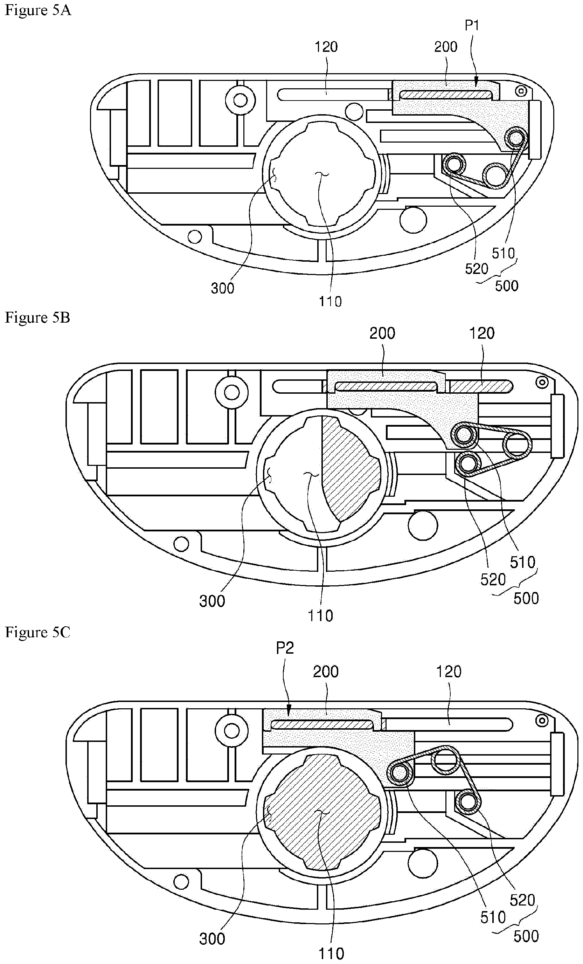

FIGS. 5A through 5C are views of a movement process of a cover of an aerosol generating device according to another embodiment.

The aerosol generating device 1 according to an embodiment may further include an elastic member 500 configured to guide the movement of the cover 200. The elastic member 500 may guide the movement of the cover 200 via an elastic force.

An end 510 of the elastic member 500 may be rotatably connected to the cover 200, and the other end 520 may be rotatably connected to the housing 100. At least portions of the end 510 and the other end 520 of the elastic member 500 may be curved and may be rotatably connected to the cover 200 and the housing 100, respectively. A portion that is wound to be circular at least once may be provided between the end 510 and the other end 520 of the elastic member 500. A shape of the elastic member 500 may be changed by movement of the cover 200 at a bottom surface of the housing 100, and then, may be restored by an elastic force, thereby guiding the movement of the cover 200.

FIG. 5A is a bottom view of the housing 100, when the cover 200 is located in the first position P1 to open the hole 110. When the cover 200 is located in the first position P1, the elastic member 500 may not receive an external force, and thus, may maintain a basic shape that is not compressed or expanded. Thus, when the cover 200 is located in the first position P1, the elastic member 500 may not provide an elastic force to the cover 200.

FIG. 5B is a bottom view of the housing 100, when the cover 200 is located in a threshold position which is a middle point between the first position P1 and the second position P2. When a user moves the cover 200 from the first position P1 to the second position P2 or from the second position P2 to the first position P1, a position of the end 510 of the elastic member 500 may be moved along with the cover 200, and thus, the elastic member 500 may be compressed.

When the elastic member 500 is compressed by an external force that a user applies to the cover 200, an elastic force for restoration to a basic shape may be provided to the cover 200. Before the cover 200 reaches the threshold position at which the external force applied by the user becomes the same as the elastic force of the elastic member 500 between the first position P1 and the second position P2, the elastic member 500 may be compressed by the external force and may accumulate the elastic force. When the cover 200 has not moved beyond the threshold position, the cover 200 may retrieve its original position due to the elastic force of the elastic member 500.

FIG. 5C is a bottom view of the housing 100, when the cover 200 is located in the second position P2 to cover the hole 110. When the cover 200 is located in the second position P2, the elastic member 500 may not receive an external force, and thus, may maintain a basic shape that is not compressed or expanded. When the cover 200 moves beyond the threshold position when the cover 200 moves from the first position P1 to the second position P2 or from the second position P2 to the first position P1, the elastic member 500 may be expanded and may accelerate movement of the cover 200 in the moving direction. In other words, when the cover 200 is moved to a point beyond the threshold position, the cover 200 may semi-automatically and slidingly move along remaining movement sections from the threshold position to the first position P1 or the second position P2, by an elastic force of the elastic member 500.

Thus, because the elastic member 500 operates as a driving force of the semi-automatic movement of the cover 200, the user may easily move the cover 200 to the first position P1 or the second position P2 by applying a little force. Also, because the cover 200 is maintained at the first position P1 or the second position P2 as long as an external force greater than the elastic force is not applied to the cover 200, an unintentional change of the position of the cover 200 may be prevented.

Although not illustrated in FIGS. 1 through 5, the aerosol generating device 1 may constitute a system together with an additional cradle. For example, the cradle may be used to charge the battery 11 of the aerosol generating device 1. Alternatively, the heater 13 may be heated when the cradle and the aerosol generating device 1 are coupled to each other.

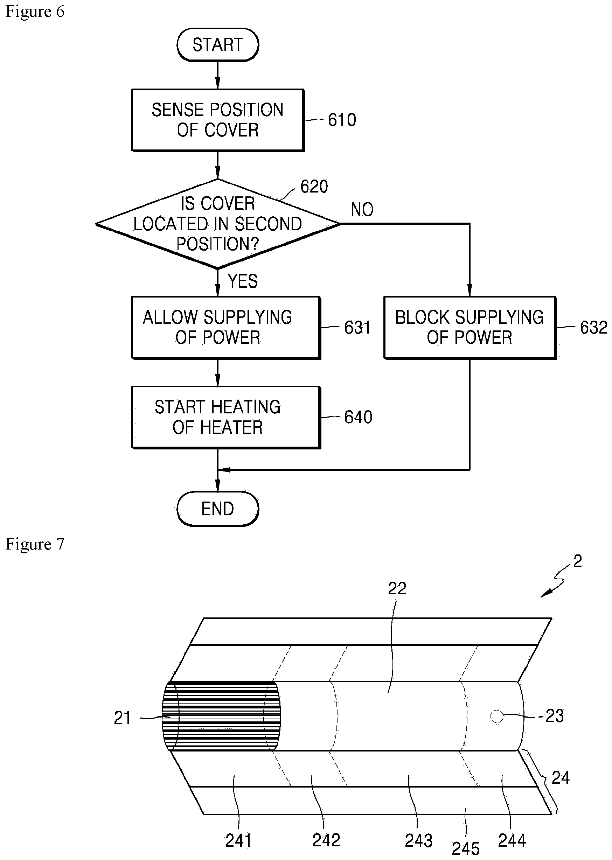

FIG. 6 is a flowchart of a method, performed by a processor of an aerosol generating device, of controlling an operation of supplying power, according to another embodiment.

The aerosol generating device 1 according to the other embodiment may control an operation of supplying power to the heater 13 from the battery 11, based on whether the cover 200 opens or closes the hole 110. When a user is using the aerosol generating device 1, the cover 200 may be located in the first position for insertion of the aerosol generating article 2. Also, when the user is not using the aerosol generating device 1, it is desired that the cover 200 be located in the second position such that impurities may not enter into the accommodation space 15 or a droplet or dregs in the accommodation space 15 may not leak to the outside of the aerosol generating device 1.

The processor 12 may allow power to be supplied from the battery 11 to the heater 13, when the cover 200 is located in the first position. In order for the user to use the aerosol generating device 1, it is required to move the cover 200 to the first position to open the hole 110. Also, when the cover 200 is located in the second position, the processor 12 may block the operation of supplying power from the battery 11 to the heater 13.

Referring to FIG. 6, the aerosol generating device 1 may sense a position of the cover 200 (operation 610). The aerosol generating device 1 may include a positioning sensor configured to sense a position change of the cover 200. The positioning sensor may sense whether the cover 200 is located in the first position or the second position. The positioning sensor may include a pressure sensor, a capacitance-type sensor, a resistive sensor, an orientation sensor, or a magnetic sensor, but is not limited thereto. The processor 12 may sense the position of the cover 200 based on a signal received from the positioning sensor.

The aerosol generating device 1 may sense whether the position of the cover 200 is the first position (operation 620).

When the cover 200 is located in the first position, and the aerosol generating article 2 is inserted, the aerosol generating device 1 may allow power to be supplied from the battery 11 to the heater 13 (operation 631). When the power supply from the battery 11 to the heater 13 is allowed, heating of the heater 13 may be started (operation 640). For example, when the aerosol generating device 1 receives a signal from the positioning sensor that a position of the cover 200 is changed to the first position, the aerosol generating device 1 may supply power to the heater 13 from the battery 11 to start an operation of the heater 13 so that aerosol may be generated.

However, when the aerosol generating device 1 senses that the cover 200 is not located in the first position, the aerosol generating device 1 may block power from being supplied to the heater 13 from the battery 11 (operation 632). For example, when the aerosol generating device 1 receives a signal from the positioning sensor that a position of the cover 200 is changed from the first position to the second position, the aerosol generating device 1 may block the power from the battery 11 from being supplied to the heater 13 to suspend the heating of the heater 13 so that the use of the aerosol generating device 1 may be ended. Thus, it is possible to manipulate the aerosol generating device 1 via movement of the position of the cover 200, without additional manipulation of the aerosol generating device 1 by a user, and thus, it may be convenient to use the aerosol generating device 1.

Also, when the cover 200 is located in the second position, the processor 12 may block the supplying of power from the battery 11 to the heater 13 so that heating of the heater 13 is not started, even when a user input for resuming heating of the heater 13 is received. When the cover 200 is located in the second position, a user may not be using the aerosol generating device 1, and thus, a safety accident, which may occur when the heater 13 is heated through a malfunction, may be prevented in advance.

FIG. 7 is a block diagram of an aerosol generating device 1 according to another embodiment.

The aerosol generating device 1 may include a processor 12, a sensing unit 40, an output unit 50, a battery 11, a heater 13, a user input unit 60, a memory 70, and a communication unit 80. However, the internal structure of the aerosol generating device 1 is not limited to those illustrated in FIG. 7. That is, according to the design of the aerosol generating device 1, it will be understood by one of ordinary skill in the art that some of the components shown in FIG. 7 may be omitted or new components may be added.

The sensing unit 40 may sense a state of the aerosol generating device 1 and a state around the aerosol generating device 1, and transmit sensed information to the processor 12. Based on the sensed information, the processor 12 may control the aerosol generating device 1 to perform various functions, such as controlling an operation of the heater 13, limiting smoking, determining whether an aerosol generating article (e.g., a cigarette, a cartridge, or the like) is inserted, displaying a notification, or the like.

The sensing unit 40 may include at least one of a temperature sensor 42, an insertion detection sensor, and a puff sensor 46, but is not limited thereto.

The temperature sensor 42 may sense a temperature at which the heater 13 (or an aerosol generating material) is heated. The aerosol generating device 1 may include a separate temperature sensor for sensing the temperature of the heater 13, or the heater 13 may serve as a temperature sensor. Alternatively, the temperature sensor 42 may also be arranged around the battery 11 to monitor the temperature of the battery 11.

The insertion detection sensor 44 may sense insertion and/or removal of an aerosol generating article. For example, the insertion detection sensor 44 may include at least one of a film sensor, a pressure sensor, an optical sensor, a resistive sensor, a capacitive sensor, an inductive sensor, and an infrared sensor, and may sense a signal change according to the insertion and/or removal of an aerosol generating article.

The puff sensor 46 may sense a user's puff on the basis of various physical changes in an airflow passage or an airflow channel. For example, the puff sensor 46 may sense a user's puff on the basis of any one of a temperature change, a flow change, a voltage change, and a pressure change.

The sensing unit 40 may include, in addition to the temperature sensor 42, the insertion detection sensor 44, and the puff sensor 46 described above, at least one of a temperature/humidity sensor, a barometric pressure sensor, a magnetic sensor, an acceleration sensor, a gyroscope sensor, a location sensor (e.g., a global positioning system (GPS)), a proximity sensor, and a red-green-blue (RGB) sensor (illuminance sensor). Because a function of each of sensors may be intuitively inferred by one of ordinary skill in the art from the name of the sensor, a detailed description thereof may be omitted.

The output unit 50 may output information on a state of the aerosol generating device 1 and provide the information to a user. The output unit 50 may include at least one of a display unit 52, a haptic unit 54, and a sound output unit 56, but is not limited thereto. When the display unit 52 and a touch pad form a layered structure to form a touch screen, the display unit 52 may also be used as an input device in addition to an output device.

The display unit 52 may visually provide information about the aerosol generating device 1 to the user. For example, information about the aerosol generating device 1 may mean various pieces of information, such as a charging/discharging state of the battery 11 of the aerosol generating device 1, a preheating state of the heater 13, an insertion/removal state of an aerosol generating article, or a state in which the use of the aerosol generating device 1 is restricted (e.g., sensing of an abnormal object), or the like, and the display unit 52 may output the information to the outside. The display unit 52 may be, for example, a liquid crystal display panel (LCD), an organic light-emitting diode (OLED) display panel, or the like. In addition, the display unit 52 may be in the form of a light-emitting diode (LED) light-emitting device.

The haptic unit 54 may tactilely provide information about the aerosol generating device 1 to the user by converting an electrical signal into a mechanical stimulus or an electrical stimulus. For example, the haptic unit 54 may include a motor, a piezoelectric element, or an electrical stimulation device.

The sound output unit 56 may audibly provide information about the aerosol generating device 1 to the user. For example, the sound output unit 56 may convert an electrical signal into a sound signal and output the same to the outside.

The processor 12, a sensing unit 40, an output unit 50, a battery 11, a heater 13, a user input unit 60, a memory 70, and a communication unit 80 may receive electrical power from the battery 11 to perform functions. Although not illustrated in FIG. 7, the aerosol generating device 1 may further include a power conversion circuit (e.g., LDO; low drop out circuit, or voltage regulator circuit) that converts power of the battery 11 and supplies the same to each components.

The user input unit 60 may receive information input from the user or may output information to the user. For example, the user input unit 60 may include a key pad, a dome switch, a touch pad (a contact capacitive method, a pressure resistance film method, an infrared sensing method, a surface ultrasonic conduction method, an integral tension measurement method, a piezo effect method, or the like), a jog wheel, a jog switch, or the like, but is not limited thereto. In addition, although not illustrated in FIG. 7, the aerosol generating device 1 may further include a connection interface, such as a universal serial bus (USB) interface, and may connect to other external devices through the connection interface, such as the USB interface, to transmit and receive information, or to charge the battery 11.

The memory 70 is a hardware component that stores various types of data processed in the aerosol generating device 1, and may store data processed and data to be processed by the processor 12. The memory 70 may include at least one type of storage medium from among a flash memory type, a hard disk type, a multimedia card micro type memory, a card-type memory (for example, secure digital (SD) or extreme digital (XD) memory, etc.), random access memory (RAM), static random access memory (SRAM), read-only memory (ROM), electrically erasable programmable read-only memory (EEPROM), programmable read-only memory (PROM), a magnetic memory, a magnetic disk, and an optical disk. The memory 70 may store an operation time of the aerosol generating device 1, the maximum number of puffs, the current number of puffs, at least one temperature profile, data on a user's smoking pattern, etc.

The communication unit 80 may include at least one component for communication with another electronic device. For example, the communication unit 80 may include a short-range wireless communication unit 82 and a wireless communication unit 84.

The short-range wireless communication unit 82 may include a Bluetooth communication unit, a Bluetooth Low Energy (BLE) communication unit, a near field communication unit, a wireless LAN (WLAN) (Wi-Fi) communication unit, a Zigbee communication unit, an infrared data association (IrDA) communication unit, a Wi-Fi Direct (WFD) communication unit, an ultra-wideband (UWB) communication unit, an Ant+ communication unit, or the like, but is not limited thereto.

The wireless communication unit 84 may include a cellular network communication unit, an Internet communication unit, a computer network (e.g., local area network (LAN) or wide area network (WAN)) communication unit, or the like, but is not limited thereto. The wireless communication unit 84 may also identify and authenticate the aerosol generating device 1 within a communication network by using subscriber information (e.g., International Mobile Subscriber Identifier (IMSI)).

The processor 12 may control general operations of the aerosol generating device 1. In an embodiment, the processor 12 may include at least one processor. The processor may be implemented as an array of a plurality of logic gates or may be implemented as a combination of a general-purpose microprocessor and a memory in which a program executable by the microprocessor is stored. It will be understood by one of ordinary skill in the art that the processor may be implemented in other forms of hardware.

The processor 12 may control the temperature of the heater 13 by controlling supply of power of the battery 11 to the heater 13. For example, the processor 12 may control power supply by controlling switching of a switching element between the battery 11 and the heater 13. In another example, a direct heating circuit may also control power supply to the heater 13 according to a control command of the processor 12.

The processor 12 may control the output unit 50 on the basis of a result sensed by the sensing unit 40. For example, when the number of puffs counted through the puff sensor 46 reaches a preset number, the processor 12 may notify the user that the aerosol generating device 1 will soon be terminated through at least one of the display unit 52, the haptic unit 54, and the sound output unit 56.

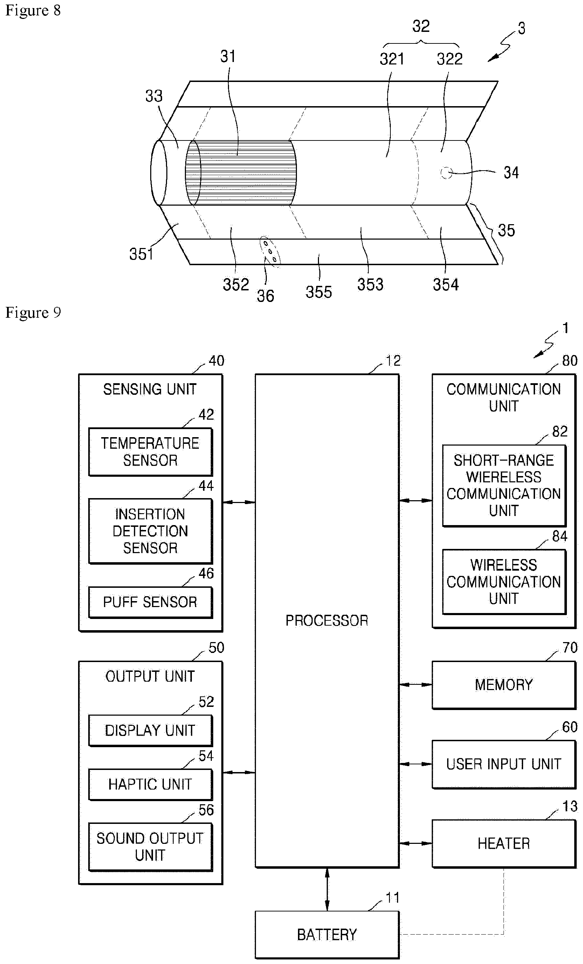

Hereinafter, the examples of the aerosol generating article 2 will be described with reference to FIGS. 8 and 9.

FIGS. 8 and 9 illustrate examples of the aerosol generating article.

Referring to FIG. 8, the aerosol generating article 2 includes a tobacco rod 21 and a filter rod 22.

Referring to FIG. 8, the filter rod 22 includes a single segment, but is not limited thereto. In other words, the filter rod 22 may include a plurality of segments. For example, the filter rod 22 may include a first segment configured to cool an aerosol and a second segment configured to filter a certain component included in the aerosol. Also, as necessary, the filter rod 22 may further include at least one segment configured to perform other functions.

The aerosol generating article 2 may be packaged by at least one wrapper 24. The wrapper 24 may have at least one hole through which external air may be introduced or internal air may be discharged. For example, the aerosol generating article 2 may be packaged by one wrapper 24. As another example, the aerosol generating article 2 may be doubly packaged by two or more wrappers 24. For example, the tobacco rod 21 may be packaged by a first wrapper 241, and the filter rod 22 may be packaged by wrappers 242, 243, 244. Also, the entire aerosol generating article 2 may be re-packaged by another single wrapper 245. When the filter rod 22 includes a plurality of segments, each segment may be packaged by wrappers 242, 243, 244.

The tobacco rod 21 may include an aerosol generating material. For example, the aerosol generating material may include at least one of glycerin, propylene glycol, ethylene glycol, dipropylene glycol, diethylene glycol, triethylene glycol, tetraethylene glycol, and oleyl alcohol, but it is not limited thereto. Also, the tobacco rod 21 may include other additives, such as flavors, a wetting agent, and/or organic acid. Also, the tobacco rod 21 may include a flavored liquid, such as menthol or a moisturizer, which is injected to the tobacco rod 21.

The tobacco rod 21 may be manufactured in various forms. For example, the tobacco rod 21 may be formed as a sheet or a strand. Also, the tobacco rod 21 may be formed as a pipe tobacco, which is formed of tiny bits cut from a tobacco sheet. Also, the tobacco rod 21 may be surrounded by a heat conductive material. For example, the heat conductive material may be, but is not limited to, a metal foil such as aluminum foil. For example, the heat conductive material surrounding the tobacco rod 21 may uniformly distribute heat transmitted to the tobacco rod 21, and thus, the heat conductivity applied to the tobacco rod may be increased and taste of the tobacco may be improved. Also, the heat conductive material surrounding the tobacco rod 21 may function as a susceptor heated by the induction heater. Here, although not illustrated in the drawings, the tobacco rod 21 may further include an additional susceptor, in addition to the heat conductive material surrounding the tobacco rod 21.

The filter rod 22 may include a cellulose acetate filter. Shapes of the filter rod 22 are not limited. For example, the filter rod 22 may include a cylinder-type rod or a tube-type rod having a hollow inside. Also, the filter rod 22 may include a recess-type rod. When the filter rod 22 includes a plurality of segments, at least one of the plurality of segments may have a different shape.

Also, the filter rod 22 may include at least one capsule 23. Here, the capsule 23 may generate a flavor or an aerosol. For example, the capsule 23 may have a configuration in which a liquid containing a flavoring material is wrapped with a film. The capsule 23 may have a spherical or cylindrical shape, but is not limited thereto.

Referring to FIG. 9, the aerosol generating article 3 may further include a front-end plug 33. The front-end plug 33 may be located on one side of the tobacco rod 31 which is opposite to the filter rod 32. The front-end plug 33 may prevent the tobacco rod 31 from being detached outwards and prevent the liquefied aerosol from flowing from the tobacco rod 31 into the aerosol generating device, during smoking.

The filter rod 32 may include a first segment 321 and a second segment 322. Here, the first segment 321 may correspond to the first segment of the filter rod 22 of FIG. 8, and the second segment 322 may correspond to the third segment of the filter rod 22 of FIG. 8.

A diameter and a total length of the aerosol generating article 3 may correspond to a diameter and a total length of the aerosol generating article 2 of FIG. 8. For example, the length of the front-end plug 33 is about 7 mm, the length of the tobacco rod 31 is about 15 mm, the length of the first segment 321 is about 12 mm, and the length of the second segment 322 is about 14 mm, but it is not limited thereto.

The aerosol generating article 3 may be packaged using at least one wrapper 35. The wrapper 35 may have at least one hole through which external air may be introduced or internal air may be discharged. For example, the front end plug 33 may be packaged by a first wrapper 351, the tobacco rod 31 may be packaged by a second wrapper 352, the first segment 321 may be packaged by a third wrapper 353, and the second segment 322 may be packaged by a fourth wrapper 354. Further, the entire aerosol generating article 3 may be repackaged by a fifth wrapper 355.

In addition, at least one perforation 36 may be formed in the fifth wrapper 355. For example, the perforation 36 may be formed in a region surrounding the tobacco rod 31, but is not limited thereto. The perforation 36 may serve to transfer heat generated by the heater 13 shown in FIGS. 2 and 3 to the inside of the tobacco rod 31.

In addition, at least one capsule 34 may be included in the second segment 322. Here, the capsule 34 may generate a flavor or an aerosol. For example, the capsule 34 may have a configuration in which a liquid containing a flavoring material is wrapped with a film. For example, the capsule 34 may have a spherical or cylindrical shape, but is not limited thereto.

The one or more embodiments may also be implemented in the form of a recording medium including instructions executable by a computer, such as a program module executable by a computer. A computer-readable medium may be any available media that may be accessed by a computer and includes both volatile and nonvolatile media, and removable and non-removable media. In addition, the computer-readable medium may include a computer storage medium and a communication medium. The computer storage includes both volatile and nonvolatile, and removable and non-removable media implemented in any method or technology for storage of information such as computer readable instructions, data structures, program modules or other data. The communication medium may include computer readable instructions, data structures, other data in non-transitory data signals, such as program modules.

Those of ordinary skill in the art related to this embodiment understand that it may be implemented in a modified form without departing from the scope of the disclosure. Therefore, the embodiments of the disclosure should be considered as illustrative examples only, and should not be construed as limiting the scope of the disclosure. The scope of the present disclosure is described in the claims rather than the foregoing description, and any modifications, substitutions and improvements of the embodiments of the disclosure should be construed as being included in the present disclosure.

It follows a list of examples:
1. An aerosol generating device comprising: a housing comprising a hole for receiving an aerosol generating article and a guide apart from the hole; and a cover configured to move along the guide between a first position and a second position to open or close the hole, wherein the hole is open when the cover is located in the first position, and the hole is closed when the cover is located in the second position.
2. The aerosol generating device of example 1, wherein the guide is apart from the hole in a first direction and extends in a second direction crossing the first direction.
3. The aerosol generating device of example 1, wherein at least a portion of the guide is located in a first area corresponding to the hole, and remaining portions of the guide are located in a second area not corresponding to the hole.
4. The aerosol generating device of example 1, further comprising an air inlet apart from the guide,
   wherein the air inlet is connected to an air flow passage, which is a path through which air moves into the aerosol generating device.
5. The aerosol generating device of example 4, wherein the air inlet is located at a circumference of the hole.
6. The aerosol generating device of example 1, further comprising a maintaining portion configured to maintain the cover in the first position or the second position.
7. The aerosol generating device of example 6, wherein the maintaining portion comprises first maintaining members provided at the cover and second maintaining members respectively positioned adjacent to both ends of the guide, and the first maintaining members are coupled to the second maintaining members so that the cover is maintained in the first position or the second position.
8. The aerosol generating device of example 1, further comprising an elastic member having an end connected to the cover and another end connected to the housing such that the elastic member guides a movement of the cover by an elastic force.
9. The aerosol generating device of example 8, wherein the elastic member moves the cover by applying the elastic force on the cover when the cover reaches a threshold position between the first position and the second position.
10. The aerosol generating device of example 1, further comprising: a heater configured to heat the aerosol generating article; a battery configured to supply power to the heater; and a processor configured to control the power supplied from the battery to the heater based on whether or not the cover opens the hole.
11. The aerosol generating device of example 10, wherein the processor is further configured to allow the battery to supply the power to the heater when the cover is located in the first position.
12. The aerosol generating device of example 10, wherein the processor is further configured to block the power supplied to the heater from the battery when the cover is not located in the first position.

## Claims

1. An aerosol generating device comprising:
a housing comprising a hole for receiving an aerosol generating article;
a cover movably arranged on the housing, and moves between a first position to open the hole and a second position to close the hole;
a guide arranged apart from the hole, and arranged on housing to guide movement of the cover; and
an elastic member connected to the cover, and guides the cover by applying the elastic force on the cover when the cover reaches a threshold position between the first position and the second position.

2. The aerosol generating device of claim 1, wherein the guide is a protrusion provided on a surface of the housing and the cover comprises a groove inserted into the protrusion of the cover.

3. The aerosol generating device of claim 1, the elastic member comprises a wound portion between an end and the other end.

4. The aerosol generating device of claim 3, wherein as the cover moves, the movement path of the wound portion forms a curve.

5. The aerosol generating device of claim 3, the elastic member further comprises a first part connected between the wound part and the one end and extending in one direction, and a second part connected between the wound part and the other end and extending in a direction different from the one direction.

6. The aerosol generating device of claim 1, wherein the elastic member is deformed in shape and accumulates the elastic force before the cover reaches the threshold position, and accelerates movement of the cover by applying the elastic force on the cover when the cover moves beyond the threshold position.

7. The aerosol generating device of claim 1, wherein the elastic member is deformed in shape and provides a restoring force by an elastic force on the cover when the cover is located to deviate from the first position and the second position.

8. The aerosol generating device of claim 1, wherein the elastic member maintains the position of the cover in the first position or the second position.

9. The aerosol generating device of claim 1, wherein an end of the elastic member is rotatably connected to the cover, and the other end of the elastic member is rotatably connected to the housing.

10. The aerosol generating device of claim 1, further comprising:
a heater configured to heat the aerosol generating article;
a battery configured to supply power to the heater; and
a processor configured to control the power supplied from the battery to the heater based on whether or not the cover opens the hole.
